## Europäisches Patentamt

## European Patent Office

## Office européen des brevets

(11) Publication number: **0 179 053**
**B1**

(12) **EUROPEAN PATENT SPECIFICATION**

(45) Date of publication of patent specification: **19.07.89**

(51) Int. Cl.⁴: **B 29 C 65/04, B 29 C 65/02, B 32 B 31/00, B 32 B 3/12**

(21) Application number: **84901288.5**

(22) Date of filing: **01.03.84**

(86) International application number:
**PCT/US84/00317**

(87) International publication number:
**WO 85/03902 12.09.85 Gazette 85/20**

(54) **METHOD OF MAKING DOUBLE WALLED, TUBULAR, THERMAL PROTECTIVE COVE RINGS.**

(43) Date of publication of application:
**30.04.86 Bulletin 86/18**

(45) Publication of the grant of the patent:
**19.07.89 Bulletin 89/29**

(84) Designated Contracting States:
**AT BE CH DE FR GB LI LU NL SE**

(56) References cited:
**GB-A-1 144 366**
**GB-A-2 082 110**
**US-A-2 918 106**
**US-A-3 206 892**
**US-A-3 270 461**
**US-A-3 437 776**
**US-A-3 739 522**
**US-A-3 872 621**
**US-A-4 256 256**
**US-A-4 267 665**
**US-A-4 412 880**
**US-A-4 425 174**
**US-A-4 425 390**

(73) Proprietor: **TERRACOPIA, INC.**
**2365 South Main**
**Salt Lake City, UT 84115 (US)**

(72) Inventor: **WALLACE, Volney**
**Terra Box 1W**
**Dugway, UT 84022 (US)**
Inventor: **PINKHAM, Carlos, F., A.**
**RFD No. 1**
**Northfield, VT 05663 (US)**

(74) Representative: **Patentanwälte Grünecker, Kinkeldey, Stockmair & Partner**
**Maximilianstrasse 58**
**D-8000 München 22 (DE)**

## Description

This application relates to an improved method of making a double walled tubular device, according to the preamble of claim 1, which is divided into a plurality of substantially vertically extending compartments which are adapted to be filled with water. The double walled tubular device so made is self supporting and can be placed around a growing plant to provide thermal protection to the plant. Such a method is known from US-A-3,739,522.

It is well known in the prior art that when water is deployed as a relatively air tight covering over a space to be protected, cold weather cannot freeze anything in that space until it first freezes the protective cover of water. The freezing of the protective cover of water is relatively slow inasmuch as water liberates heat on freezing, about 80 calories of heat per gram of ice formed. This release of heat is comparable to the release of heat by an equal weight of rock cooling from about 260 degrees Centigrade down to about zero degrees Centigrade. In contrast to hot rock, water releases its heat at zero degrees Centigrade as if it were a water burning furnace set to operate at and maintain a temperature of zero degrees Centigrade. Since heat loss from the system is proportional to the difference between the inside and outside temperature, this low temperature release of heat is far more effective than would be a hot rock under a hot cap.

There is a great need for protection of seedlings and young plants against late frosts in the spring thereby enabling an early start of vegetables and other seedlings. A plant which has a month's head start has an additional month at the end of the season when full development of the plant results in a maximal rate of food production.

Various means have been suggested in the prior art for utilizing water in the thermal protection of plants. It has been suggested to spray water directly on the plants as well as to somehow provide a water enclosure around or above the plants. In British Pat. No. 1,144,366, it is taught to build a trench up around the plants and then interpose between the plant and the sky a layer of water in a translucent container. Alternatively, the British Patent suggests that a light admitting cover can be placed over the plant with bags full of water leaving on and over the light admitting cover.

U.S. Patent No. 3,206,892 teaches a protective device for plants containing an inflatable ballast tube partially filled with water and adapted to fit around a plant. The device may also contain a single walled tent or cover extending over the plant. The purpose of the water in the ballast tube is two fold. The water acts as a ballast to hold the device down, and the water assists in retaining heat in the ground under the ballast.

U.S. Patent No. 3,270,461 also teaches a thermal plant protective device having a water ballast tube at the bottom and which is closed at the top forming a single walled cover about most of the plant. Water is sprayed on the plant within the cover and runs down the inside of the cover into the ballast tube. Maximum thermal protection is acquired only by continuously spraying water within the cover.

A double walled insulative device in which elongate compartments are formed between the outside and inside walls is disclosed in U.S. Pat. No. 4,267,665. The outside and inside walls are said to be joined together by heat sealing, adhesives, or similar means to form compartments. The devices of U.S. Pat. No. 4,267,665 are very efficient in providing thermal protection to plants around which the devices are placed. The manufacture of such devices, however, can be a real problem, requiring much manual labor.

A principal objective of the present invention was to provide a method for economically mass producing a superior double walled tubular device which is divided into a plurality of substantially vertically extending compartments which are adapted to be filled with water, whereby the water-filled tubular device is self supporting and can be placed around a growing plant for thermally protecting the plant.

Another objective of the present invention was to provide an effective process for rapidly and efficiently making a superior double walled tubular device from two sheets of thermoplastic material wherein (1) the respective sheets are folded along their longitudinal dimensions, (2) side-by-side, elongate compartments, which are open at one end, are formed in the respective folded sheets of material by forming spaced weld lines in the respective sheets, with the weld lines extending transversely across the folded sheets of material, (3) the two sheets of material containing the elongate compartments are superimposed one over the other such that the open ends of said compartments in each sheet are positioned adjacent to each other along one longitudinal side edge of the superimposed folded sheets of material, (4) respective pairs of relatively closely spaced weld lines are then formed at relatively widely spaced positions along the longitudinal length of the superimposed sheets of material, such that a plurality of compartments in each of the superimposed sheets are located between the relatively widely spaced pairs of weld lines, with each pair of closely spaced weld lines bonding the four layers of the superimposed folded sheets of material along the closely spaced pair of weld lines, and (5) the superimposed, folded, and bonded sheets of material are cut transversely across their width between the two closely spaced weld lines of each respective pair of closely spaced weld lines, to form individual double walled devices which can be shaped into a self sustaining tubular shape when the plurality of compartments formed therein are filled with water and the tubular shaped device can be placed around a plant to provide thermal protection for the encircled plant.

A further objective of the present invention was to provide a superior double walled tubular device produced by the novel method disclosed herein.

BRIEF DESCRIPTION OF THE INVENTION

The above objectives of the present invention are achieved by providing a novel, particularly effective and economical method of making a superior double walled tubular device, wherein the method comprises the following steps:

(a) a first sheet of thermoplastic, polymeric material, which has been folded back over itself along its longitudinal dimensions, is introduced or fed longitudinally to a first heat sealing station wherein repetitive, spaced, elongate, first weld lines are formed transversely across the folded back first sheet of material so as to form a plurality of side-by-side, elongate first compartments in the folded back first sheet between adjacent first weld lines therein, each of the first compartments being open at one end thereof and closed at the opposite end by the fold in the folded back, first sheet of material;

(b) a second sheet of thermoplastic, polymeric material, which has been folded back over itself along its longitudinal dimension, is introduced or fed longitudinally to a second heat sealing station wherein repetitive, spaced, elongate, second weld lines are formed transversely across the folded back second sheet of material so as to form a plurality of side-by-side, elongate second compartments in the folded back second sheet between adjacent second weld lines therein, each of the second compartments being open at one end thereof and closed at the opposite end by the fold in the folded back, second sheet of material;

(c) the portions of the first and second sheets of thermoplastic, polymeric material from steps (a) and (b) and which have the first and second weld lines formed therein, respectively, are superimposed one over the other such that the mutually respective weld lines formed in each of the superimposed portions of the first and second sheets of material lie substantially adjacent to each other and further so that the open ends of the mutually respective compartments in the superimposed portions of the first and second sheets of material lie substantially adjacent to each other, and the superimposed portions of the first and second sheets of material are introduced to a third heat sealing station;

(d) forming elongate pairs of third weld lines across the superimposed first and second sheets of material in the third heat sealing station, so as to seal and weld together all the layers of the first and second sheets of material along the third weld lines, with the respective pairs of third weld lines being spaced along the longitudinal dimension of the superimposed portions of the first and second sheets of material such that a plurality of compartments are included in each of the superimposed portions of the first and second sheets of material between adjacent, spaced pairs of third weld lines, and with the two respective weld lines of each pair of third weld lines being spaced relatively closely adjacent to each other;

(e) cutting the first and second sheets of material from step (d) transversely across the width of the superimposed first and second sheets between the two relatively closely spaced weld lines of each pair of third weld lines; and

(f) repeating steps (a) through (e) in repetitive cycles.

In a particular preferred embodiment of the invention, the first and second sheets of thermoplastic material are obtained in continuous rolls which have been either prefolded on the rolls or the material is folded as it is withdrawn from the roll. In either situation, it is preferable to have the sheets of material folded in what is generally referred to in the plastics industry as a "J" fold. That is the one longitudinal side of the sheet of material is folded over the sheet towards the other longitudinal side but with the side edge of the one side of the sheet being spaced slightly from the side edge of the other side rather than side edges being folded together. Advantageously, the folded back side edge is spaced by about one-eighth to one and one-half inches or more from the other side edge. The sheets of thermoplastic material are advantageously drawn continuously from the rolls thereof and the steps of the method as outlined above are continuously repeated, with subsequent portions of the first and second sheets of thermoplastic material being withdrawn from the rolls of continuous material during each repeated cycle of the process.

The process or method of the present invention produces a unique, novel, double walled, tubular device which can readily be placed around plant. The plurality of vertically spaced compartments can be easily and readily filled with water, and when the compartments are filled with water and the device formed into a tubular position, the side walls of the device become self supporting. The device, when filled with water and placed around a plant, offers superior thermal protection for the plant from cold temperatures.

Additional objects and features of the invention will become apparent from the following detailed description, taken together with the accompanying drawings.

THE DRAWINGS

A preferred embodiment of the present invention representing the best mode presently contemplated of carrying out the invention is illustrated schematically in the accompanying drawings, in which:

FIG. 1 is a schematical cross section of one embodiment of simplified apparatus by which the process of the present invention can be operated;

FIG. 2 is a transverse cross section taken along line -2 of Fig. 1;

FIG. 3 is a partial pictorial view of the intermediate platen member of the apparatus of Fig. 1; and

FIG. 4 is a pictorial view of the double walled, tubular device which is made in accordance with the method or process of the present invention.

## DETAILED DESCRIPTION OF THE INVENTION

In accordance with the present invention, a process or method is provided for making a double walled, tubular device which is divided into a plurality of substantially vertically extending compartments which are adapted to be filled with water. The water filled tubular device is self supporting and can be placed around a growing plant for thermally protecting the plant from cold weather and temperatures as low as from -5 degrees C. to -12 degrees C.

The process comprises a series of steps which can be repeated in cyclic manner to result in a process or method for making the thermal protection devices in a continuous manner. In the first step, a first sheet 11 of thermoplastic, polymeric material, which has been folded back over itself, is introduced into a first heat sealing station wherein repetitive, spaced, elongate, first weld lines are formed transversely across the folded back first sheet 11 of material.

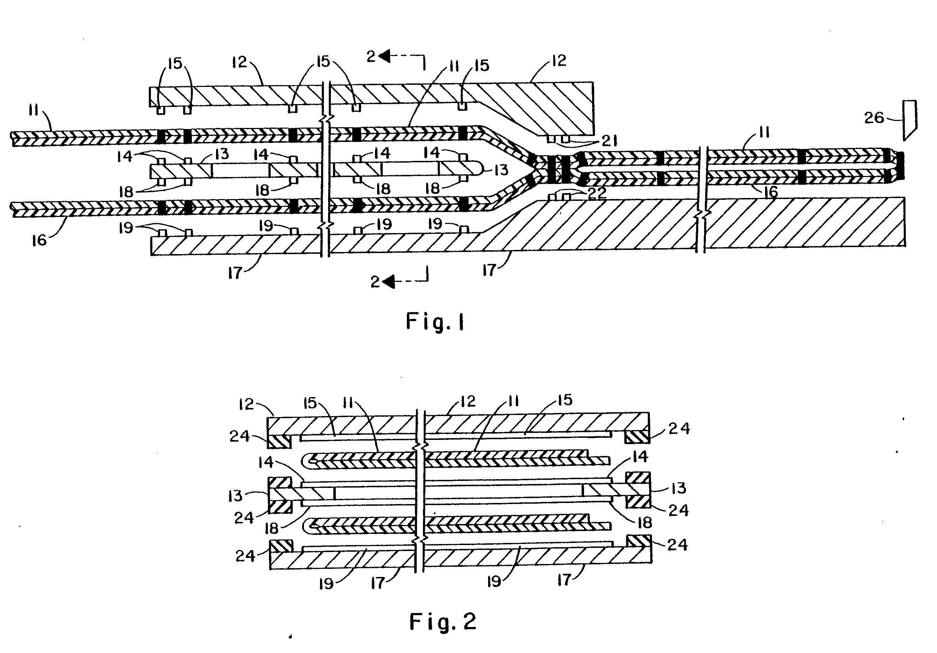

As illustrated diagramatically in Figs 1 and 2, the first sheet 11 of thermoplastic, polymeric material is folded back over itself along the longitudinal length of the sheet. The sheet 11 of material is advantageously withdrawn from a continuous roll thereof (the roll is not shown in the drawings). The plastic material can be purchased commercially in large rolls in which the plastic material is already folded upon itself on the roll. The sheet 11 of material, in such instances, has a cross section as shown in Fig. 2 as withdrawn from the roll. If the plastic material is purchased in a roll which is not folded, the sheet is first folded along its longitudinal dimensions as it is withdrawn from the roll, and the folded back sheet is then introduced into the first heat sealing station.

As shown in Fig. 1, the folded back first sheet 11 of thermoplastic, polymeric material is introduced or fed between first and second, broad, substantially flat platens. The first platen identified by the referenced numeral 12 is aligned in face-to-face alignment with the second platen which is identified by the reference numeral 13. The platens 12 and 13 define the first heat sealing station for the apparatus as schematically shown in Figs. 1 and 2. The first heat sealing station further comprises a plurality of spaced, elongate, first heat sealing elements 14. The heat sealing elements 14 extend along at least one of the respective facing surfaces of the platens 12 and 13. As illustrated, the heat sealing elements 14 are shown extending along the upper surface of the second platen 13. Mutually respective, elongate, compression pads 15 advantageously extend along the lower surface of the first platen 12 in alignment with mutually respective heat sealing elements 14. The first heat sealing elements 14 are spaced apart in mutually parallel relationship with each other, with the heat sealing elements 14 extending across the entire width of the folded first sheet 11 of thermoplastic, polymeric material from the folded edge thereof when the folded first sheet 11 is positioned between the first and second platens 12 and 13 as is best shown in Fig. 2.

In the second step, a second sheet 16 of thermoplastic, polymeric material, which has been folded back over itself, is introduced into a second heat sealing station wherein repetitive, spaced, elongate, second weld lines are formed transversely across the folded back second sheet 16 of material. The second sheet 16 of material is similar to the first sheet 11. The second sheet 16 is folded back over itself along the longitudinal length of the sheet, and the sheet 16 is preferably withdrawn from a continuous roll in the same manner as described above with respect to first sheet 11.

As shown in Fig. 1, the folded back second sheet 16 of thermoplastic, polymeric material is introduced or fed between the second platen 13 and a third, broad, substantially flat platen 17 which is aligned in face-to-face alignment with the lower surface of the second platen 13. The platens 13 and 17 define the second heat sealing station for the apparatus as schematically shown in Figs. 1 and 2. The second heat sealing station further comprises a plurality of spaced, elongate, second heat sealing elements 18. The heat sealing elements 18 extend along at least one of the respective facing surfaces of the platens 13 and 17. As illustrated, the heat sealing elements 18 are shown extending along the lower surface of the second platen 13. Mutually respective, elongate, compressions pads 19 advantageously extend along the upper surface of the third platen 17 in alignment with mutually respective heat sealing elements 18. The second heat sealing elements 18 are spaced apart in mutually parallel relationship with each other, with the heat sealing elements 18 extending across the entire width of the folded second sheet 16 of thermoplastic, polymeric material from the folded edge thereof when the folded second sheet 16 is positioned between the second and third platens 13 and 17 as is best shown in Fig. 2.

Repetitive, spaced, elongate weld lines are formed transversely across the folded back first and second sheets 11 and 16 so as to form elongate first and second compartments in the sheets 11 and 16, respectively. The elongate compartments are formed between the adjacent weld lines in the sheets 11 and 16 such that each of the individual compartments is open at one end thereof and closed at its other end by the fold in the respective folded back sheets 11 and 16.

The elongate weld lines are formed in the portions of the sheets 11 and 16 during the residence time of those portions within the first and second heat sealing stations. Preferably, the first sheet 11 and the second sheet 16 of thermoplastic material are introduced into the first and second heat sealing stations simultaneously, and the formation of the weld lines in the respective sheets 11 and 16 are formed simultaneously. The simultaneous formation of the weld lines is advantageously formed in the apparatus as schematically shown in Figs. 1 and 2 by compressing the first, second, and third platens 12, 13 and 17 together in closely engaged face-to-face relationship such that (1) the first heat sealing elements 14 are compressed tightly together with the first sheet of material 11 between the first and second platens 12 and 13, and (2) the second heat sealing elements 18 are compressed tightly together with the second sheet 16 between the second and third platens 13 and 17. The compression pads 15 and 19 on the first and third platens 12 and 17, respectively, are helpful in assuring a tight compression between the sheets of thermoplastic material and the respective heat sealing elements 14 and 18.

While the first, second and third platens 12, 13 and 17 are compressed together, the first and second heat sealing elements are heated to a temperature sufficient to effect fusion of the folded over layers of the first and second sheets 11 and 16 of thermoplastic material, respectively, along the loci of contact between the respective first and second heat sealing elements 14 and 18 and the mutually corresponding first and second sheets 11 and 16 of thermoplastic material. The first and second sheets of folded over material are thus fused and bonded together along the elongate bond lines corresponding to the mutually respective loci of contact between the heat sealing elements and the sheets of thermoplastic material so as to form individual, elongate compartments in each of the portions of the first and second sheets 11 and 16 in the first and second heat sealing stations. The heating sealing elements 14 and 18 advantageously comprise electrical resistive heating elements, and they are quickly heated by passing electrical current through the heating elements when the platens 12, 13 and 17 are compressed together. When using a superimposed set of platens, as shown diagramatically in Figs. 1 and 2, the mutually corresponding pairs of heat sealing elements 14 and 18 can be combined as single element. In such an arrangement, although not shown in the drawings, elongate openings could be formed in the second platen 13 at the locations of the heat elements. The heat elements could then be stretched across the respective openings, and the individual heat elements would be exposed to both the upper sheet 11 of material and the lower sheet 16 of material. Each individual heat element would thus be capable of simultaneously forming a weld line in the upper sheet 11 and the lower sheet 16.

Following the heat sealing and formation of the bond lines in the first and second sheets 11 and 16 of thermoplastic material, the compression is released between the first, second and third platens 12, 13 and 17 and the portions of the sheets 11 and 16 of thermoplastic material are advanced from the first and second heat sealing stations so that subsequent, unsealed portions of the first and second sheets of material are simultaneously advanced or fed to the first and second heat sealing stations between the first, second and third platens 12, 13 and 17.

The portions of the first and second sheets 11 and 16 of thermoplastic material which have the weld lines formed therein are fed forward to a third heat sealing station. The portions of the first and second sheets 11 and 16 are superimposed one over the other in the third heat sealing station or location such that mutually respective weld lines formed in each of the portions of the first and second sheets 11 and 16 coming from the first and second heat sealing stations lie substantially adjacent to each other and so that the open ends of the mutually respective compartments in the first and second sheets 11 and 16 lie substantially adjacent to each other.

Although it is advantageous to utilize a superimposed set of platens as shown in Figs. 1 and 2 and to simultaneously advance the first and second sheets 11 and 16 through the set of platens as discussed above, it is to be specifically recognized that other embodiments of apparatus could be used. Separate and distinct sets of platens could be used, and the sheets of material from the separate platens could be brought together in superimposed condition in the third heat sealing station. In another possible alternative, the first and second heat sealing stations could comprise separate and distinct nip rollers, with a heat sealing element being associated with each of the nip rollers. As the first and second sheets of material passed through the respective nip rollers, the spaced, repetitive weld lines would be formed. The sheets would then be superimposed and sent to the third heat sealing station which could also be a nip roller having a heat sealing element associated therewith.

Returning, however, to the apparatus shown, schematically in Figs. 1-3, the third or final heat sealing station is comprised at least in part by extensions of the first and third platens 12 and 17. As illustrated, the first and third platens 12 and 17 extend beyond the second platen 13 in the direction of movement of the sheets of material 11 and 16 through the system of platens. This allows the sheets 11 and 16 of thermoplastic material to be brought together in superimposed condition as they are drawn forward from the first and second heat sealing stations. As shown, the first and second sheets 11 and 16, as they are withdrawn from the first and second heat sealing stations, are superimposed one over the other so that mutually respective bond lines formed in each of the portions of the sheets lie substantially adjacent to each other, with the folded side edges of the sheets being mutually adjacent to each other at one of the longitudinal side edges of the superimposed sheets, and with the open ends of the compartments formed in each of the superimposed sheets being aligned along the opposite side edge of the superimposed sheets.

The final or third heat sealing station comprises the extensions of the first and third platens 12 and 17. These extending end portions of the platens 12 and 17 can have somewhat thickened cross-sectional depths as shown in Fig. 1 to make up for the thickness of the second platen 13 which does not extend between the end portions of the first and second platens 12 and 17. The third or final heat sealing station has a pair of elongate third heat sealing elements 21 which are spaced in mutually parallel relationship with each other and substantially parallel with the first and second heat sealing elements 14 and 18 of the first and second heat sealing stations. The third heat sealing elements 21 are adapted to be brought into compressed contact with the superimposed first and second sheets 11 and 16 and effect fusion of the folded over layers of the first and second sheets as well as fusion of the first and second sheets 11 and 16 to each other along the loci of contact between the third heat sealing elements 21 and the superimposed sheets of material as the platens 12, 13, and 17 are compressed together. A pair of compression pads 22 are provided to aid in assuring a tight compression between the sheets of thermoplastic material and the heat sealing elements 21. The heat sealing elements 21 advantageously comprise electrical resistive heating elements which are quickly heated by passing electrical current through the heating elements when the platens 12, 13 and 17 are compressed together.

The arrangement of the platens 12, 13 and 17 as illustrated in Figs. 1 and 2 allows the platens to move together simultaneously such that the heat sealing of compartments in the first and second sheets 11 and 16 and the bonding of the first and second sheets together at relatively widely spaced intervals can be done in synchronous manner during the simultaneous, repetitive movements of the platens 12, 13 and 17. As the bond lines are being formed in the particular portions of the separate sheets 11 and 16 in the first and second heat sealing stations to form the individual compartments therein, the final weld lines or bonds which fuse the first sheet to the second sheet are being formed simultaneously by the heat sealing elements 21 of the third heat sealing station. The sheets 11 and 16 are then moved forward and the simultaneous heat sealing functions are repeated. As the sheets 11 and 16 exit from the third heat sealing station, the first and second sheets 11 and 16 are cut or slit transversly across their width between the two spaced weld lines formed in the third heat sealing station.

The heat sealing elements 21 are spaced from the trailing heat elements 14 and 18 of the first and second heat sealing stations by a distance somewhat equivalent to the distance between the respective heat sealing elements 14 and 18 of the first and second heat sealing stations. Thus, as the sheets of material 11 and 16 are fed forward from the first and second heat sealing stations to the third heat sealing station, the trailing bond lines in sheets 11 and 16 coming from the first and second heat sealing stations can be advanced so that they are moved ahead of the heat sealing elements 21 in the third heat sealing stations by the width of one of the compartments in the bonded sheets. The heat sealing elements 21 would form a final compartment following the trailing bond lines as well as fuse the first and second sheets 11 and 16 together. The first compartments in the subsequent portions of the sheets 11 and 16 of material would then be formed between the heat sealing elements 21 and the forward most heat sealing elements 14 and 18 of the first and second heat sealing stations.

In a preferred embodiment of the invention, as illustrated diagramatically in Figs. 1 and 2, the initial heat sealing elements 14 and 18 on the left hand side of the first and second heat sealing stations, i.e., the trailing heat sealing elements, are spaced relatively closely as a pair, such as by 1/2 or 3/4 of an inch. The other heat sealing elements 14 and 18 are spaced about 3 to 4 inches, typically. The pair of third heat sealing elements 21 are spaced about 3 to 4 inches, typically, from the final heat sealing elements 14 and 18 of the first and second heat sealing stations. The pair of third heat sealing elements are spaced apart by less than 1/2 of an inch, typically about 3/8 of an inch. When the sheets 11 and 16 of material are advanced in the apparatus as shown diagramatically in Figs. 1 and 2, the pair of closely spaced trailing weld lines formed by the pair of closely spaced heat sealing elements 14 and 18 at the left hand side of the first and second heat sealing stations are moved forward to a position in which the pair of third heat sealing elements 21 will contact the sheets 11 and 16 of material equal spaced between the pair of closely spaced, trailing weld lines. This will form a double seal at the beginning and end of each tubular units as the sheets 11 and 16 of material are severed or cut transversely across their widths between the two spaced weld lines formed by the heat sealing elements 21 in the third heat sealing station.

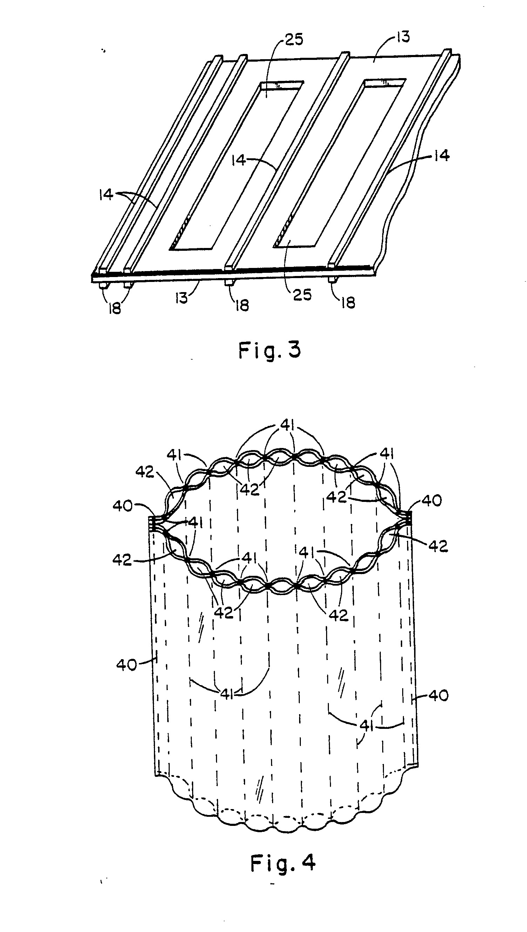

The compressive movement of the first, second and third platens 12, 13 and 17 of the apparatus as diagramatically illustrated in Figs. 1 and 2 is advantageously provided by drawing a vacuum between the first and third platens. Compressive sealing means 24 can be attached around the perimeter edges of the platens 12, 13 and 17 to aid in holding the vacuum within the platens. Switching means not shown can be used with the apparatus which is activated when a preset vacuum is achieved between the platens. The switching means would allow electrical current to flow in the resistive heat sealing elements when the switching means is activated. The switching means would remain in the active state for a present period of time and then deactivate. The deactivation would terminate the vacuum as well as the electrical current in the resistive heaters. With the compression between the platens being released, the sheets 11 and 16 of material can then be advanced to the next cycle. To aid in drawing the platens together, openings such as the rectangular openings 25 as best shown in Fig. 3 are provided in the intermediate or second platen 13. The openings 25 allow the vacuum to draw the outermost platens 12 and 17 evenly together, with the third platen 13 and the sheets 11 and 16 of thermoplastic material compressed uniformly therebetween.

As shown in Fig. 1 the lower platen 17 can be extended out to form a support for the portion of the sheets 11 and 16 which extend from the heat sealing elements 21 and the third heat sealing station. A cutting knife 26 and a knife edge can be provided at the far end of the extension of platen 17 for cutting the sheets 11 and 16 of material.

The sections cut from the sheets 11 and 16 are joined at their opposite longitudinal ends to form a double walled tubular device in accordance with the present invention. One of the tubular devices produced from the process or method in accordance with the present invention is shown in Fig. 4, with the tubular device being formed into its generally round, tubular configuration for being placed around a plant. The weld lines 40 at each of the ends of the tubular device are the welds formed by the heat sealing elements 21 of the third heat sealing station as discussed hereinbefore. The weld lines 41 are those formed by the heat sealing elements 14 and 18 of the first and second heat sealing stations as discussed hereinbefore. The elongate compartments formed in the tubular device are shown at their open ends 42.

Any thermoplastic material may be used as the sheets 11 and 16, such as polyethylene, polypropylene, etc. It is particularly advantageous to use polyethylene material, with the sheets having a thickness of about 5.5 mils. Ultra violet inhibitors and puncture resistant additives are preferably added to the thermoplastic material.

While the invention has been described in the best mode presently contemplated, the invention is not to be limited to those embodiments shown and described but is to be defined by the scope of the appended claims and equivalents thereof.

**Claims :**

1. A method of making a double walled, tubular device which is divided into a plurality of substantially vertically extending compartments (42) which are adapted to be filled with water, whereby the water-filled tubular device is self-supporting and can be placed around a growing plant for thermally protecting the plant, said method comprising the step of:

   (a) feeding a first sheet (11) of thermoplastic, polymeric material which has been folded back over itself to a first heat sealing station wherein repetitive, spaced, elongated first weld lines are formed transversly across the folded back first sheet (11) of material so as to form elongated first compartments (42) in the folded back first sheet (11) between adjacent first weld lines therein, each of said first compartments (42) being open at one end thereof and closed at its other end by the fold in said folded back first sheet of material, being characterized in the following steps:

   (b) feeding a second sheet (16) of thermoplastic, polymeric material which has been folded back over itself to a second heat sealing station wherein repetitive, spaced, elongated second weld lines are formed transversly across the folded back second sheet of material so as to form elongated second compartments (42) in the folded back second sheet (16) between adjacent second weld lines therein, each of said second compartments (42) being open at one end thereof and closed at its other end by the fold in said folded back second sheet of material;

   (c) feeding the portions of the first and second sheets (11 and 16) of material having said first and second weld lines, respectively, therein from steps (a) and (b) forward to a third heat sealing station; wherein said portions of the first and second sheets (11 and 16) of material having said first and second weld lines formed therein are superimposed over each other so that mutually respective weld lines formed in each of the portions of the first and second sheets (11 and 16) of material during steps (a) and (b) lie substantially adjacent to each other and so that the open ends of the mutually respective compartments (42) in said first and sheets of material lie substantially adjacent to each other;

   (d) as the superimposed first and second sheets (11 and 16) of material pass through said first heat sealing station, repetitive, spaced, elongated pairs of third weld lines are formed across the superimposed first and second sheets of material so as to seal and weld together said first and second sheets (11 and 16) of material along said third weld lines, with the two respective weld lines of each pair of third weld lines being spaced closely adjacent to each other and respective pairs of third weld lines being spaced along the longitudinal dimension of said first and second sheets (11 and 16) such that a plurality of compartments (42) in each of said first and second sheets (11 and 16) of material are included between adjacent, spaced pairs of third weld lines;

   (e) cutting the first and second sheets (11 and 16) of material transversly across their width between the two closely spaced weld lines of each pair of third weld lines formed in step (b); and

   (f) repeating steps (a) through (e).

2. A method in accordance with claim 1, wherein steps (a) through (e) are continuously repeated.

3. A method in accordance with claim 1 or 2, wherein each of the first and second sheets (11 and 16) are folded over themselves such that the respective lateral edges of each folded sheet (11 and 16) of material are spaced from each other as the respective sheet (11 or 16) is folded flat.

4. A method in accordance with one of claims 1 to 3, wherein

   the first sheet (11) of thermoplastic polymeric material is fed between first and second broad, substantially flat platens (12 and 13), with a plurality of spaced, elongated, first heat sealing elements (14) extending along at least one of the respective facing surfaces of said first and second platens (12 and 13), said first heat sealing elements (14) being spaced in mutually parallel relationship to each other, with the heat sealing elements (14) extending across the entire width of the folded first sheet (11) of thermoplastic, polymeric material from the folded edge thereof when said first sheet (11) of material is positioned between said first and second platens (12 and 13);

the second sheet (16) of thermoplastic, polymeric material is fed between said second platen (13) and a third broad, substantially flat platen (17), with a plurality of spaced, elongated second heat sealing elements (18) extending along at least one of the respective facing surfaces of said second and third platens (13 and 17), said second heat sealing elements (18) being spaced in mutually parallel relationship to each other, with the heat sealing elements (18) extending across the entire width of the folded second sheet (16) of thermoplastic, polymeric material from the folded edge thereof when said second sheet (16) of material is positioned between said second and third platens (13 and 17);

compressing the first, second and third platens (12, 13 and 17) together in closely engaged, face-to-face relationship such that (1) the first heat sealing elements (14) are compressed tightly together with said first sheet (11) of thermoplastic material between said first and second platens (12 and 13), and

(2) the second heat sealing elements (18) are compressed tightly together with said second sheet (16) of thermoplastic material between said second and third platens (13 and 17);

while said first, second and third platens (12, 13 and 17) are compressed together, heating said first and second heat sealing elements (14 and 18) to a temperature sufficient to effect fusion of the folded-over layers of said first and second sheets (11 and 16) of thermoplastic material, respectively, along the loci of contact between the respective first and second heat sealing elements (14 and 18) and the corresponding first and second sheets (11 and 16) of thermoplastic material, whereby the respective folded-over first and second sheets (11 and 16) of material are fused and bonded together along elongated bond lines corresponding to the mutually respective loci of contact between said heat sealing means (14 and 18) and said first and second sheets (11 and 16) of thermoplastic material so as to form the individual, elongated compartments (42);

releasing the compression between the first, second and third platens (12, 13 and 17) and advancing the portion of said first and second sheets (11 and 16) of thermoplastic material from the first, second and third platens (12, 13 and 17) following the heat sealing formation of said individual compartments in said first and second sheets (11 and 16) of thermoplastic material so that subsequent unsealed portions of said first and second sheets (11 and 16) of thermoplastic material are simultaneously advanced or fed between the respective first, second and third platens (12, 13 and 17);

said third heat sealing station having a pair of elongated third heat sealing elements (21) which are spaced in mutually parallel relationship to each other with said third heat sealing elements (21) being adapted to be brought into compressed contact with the superimposed first and second sheets (11 and 16) and effect fusion of the folded-over layers of said first and second sheets (11 and 16) as well as fusion of the first and second sheets (11 and 16) to each other along the loci of contact between the third heat sealing elements (21) and said superimposed first and second sheets (11 and 16) of thermoplastic material, said superimposed first and second sheets (11 and 16) being fed forward such that the mutually respective, trailing pairs of bond lines formed in the first and second sheets (11 and 16) of material are positioned adjacent to said third heat sealing element (21);

bringing the third heat sealing element (21) into contact with the superimposed first and second sheets (11 and 16) so as to seal the first and second sheets (11 and 16) together along two spaced weld lines; and

separating the third heat sealing elements (21).

**Patentansprüche**

1. Ein Verfahren zum Herstellen einer doppelwandigen, rohrförmigen Vorrichtung, welche in eine Mehrzahl von im wesentlichen sich senkrecht erstreckenden Zwischenräume (42) geteilt ist, die mit Wasser gefüllt werden können, wobei die wassergefüllte rohrförmige Vorrichtung selbsttragend ist und um eine wachsende Pflanze zum thermischen Schützen der Pflanze angeordnet werden kann, wobei das Verfahren folgende Verfahrensschritte umfaßt:

(a) Fördern einer ersten Platte (11) aus thermoplastischem polymeren Material, welche über sich selbst umgekantet worden ist, zu einer ersten Wärmedichtstation, wobei sich wiederholende, beabstandete langgestreckte erste Schweißnähte quer über die umgekantete erste Materialplatte (11) ausgebildet werden, um erste langgestreckte Zwischenräume (42) in der umgekanteten ersten Platte (11) zwischen benachbarten ersten Schweißnähten auszubilden, wobei jeder der ersten Zwischenräume (42) an einem Ende offen ist und am anderen Ende durch die Umkantung in der ersten umgekanteten Materialplatte geschlossen ist, gekennzeichnet durch die folgenden Verfahrensschritte:

(b) Zuführen einer zweiten Platte (16) aus thermoplastischem, polymeren Material, die über sich selbst umgekantet worden ist, zu einer zweiten Wärmedichtstation, wobei sich wiederholende, beabstandete langgestreckte zweite Schweißnähte quer über die zweite umgekantete Materialplatte ausgebildet werden, um zweite langgestreckte Zwischenräume (42) in der umgekanteten zweiten Platte (16) zwischen benachbarten zweiten Schweißnähten auszubilden, wobei jeder der zweiten Zwischenräume (42) an einem Ende offen und am anderen durch die Umkantung in der umgekanteten zweiten Materialplatte geschlossen ist;

(c) Zuführen der Abschnitte der ersten und zweiten Materialplatten (11 und 16), die die ersten bzw. zweiten durch die Verfahrensschritte (a) und (b) ausgebildeten Schweißnähte aufweisen, vorwärts zu einer dritten Wärmedichtstation; wobei die Abschnitte der ersten und zweiten Materialplatten (11 und 16), die die ersten und zweiten Schweißnähte aufweisen, jeweils übereinanderliegend angeordnet sind, so daß die wechselseitig jeweiligen Schweißnähte, die in jedem der Abschnitte der ersten und zweiten Materialplatten (11 und 16) während der Verfahrensschritte (a) und (b) ausgebildet worden sind, im wesentlichen benachbart zueinander liegen, und so daß die offenen Enden der wechselweise jeweiligen Zwischenräume (42) in den ersten und zweiten Materialplatten im wesentlichen benachbart zueinander liegen;

(d) Ausbilden von sich wiederholenden, beabstandeten, langgestreckten Paaren von Schweißnähten quer über die übereinander angeordneten ersten und zweiten Materialplatten, während die übereinander angeordneten ersten und zweiten Materialplatten (11 und 16) durch die erste Wärmedichtstation hindurch verlaufen, um die ersten und zweiten Materialplatten (11 und 16) zu dichten und aneinander entlang der dritten Schweißnähte zu verschweißen, wobei die beiden jeweiligen Schweißnähte eines jeden Paares dritter Schweißnähte knapp beabstandet benachbart zueinander vorliegen und wobei entsprechende Paare dritter Schweißnähte entlang der Längsabmessung der ersten und zweiten Platten (11 und 16) beabstandet sind, so daß eine Mehrzahl von Zwischenräumen (42) in jeder der ersten und zweiten Materialplatten (11 und 16) zwischen benachbarten beabstandeten Paaren der dritten Schweißnähte vorliegen;

(e) Schneiden der ersten und zweiten Materialplatten (11 und 16) quer über ihre Breite zwischen den zwei knapp beabstandeten Schweißnähten jedes Paares dritter Schweißnähte, die in Schritt (b) ausgebildet worden sind;

(f) Wiederholen der Verfahrensschritte (a) bis (e).

2. Ein Verfahren nach Anspruch 1, wobei die Verfahrensschritte (a) bis (e) fortlaufend wiederholt werden.

3. Ein Verfahren nach Anspruch 1 oder 2, wobei jede der ersten und zweiten platten (11 und 16) so umgekantet werden, daß die jeweiligen seitlichen Ränder jeder umgekanteten Materialplatte (11 und 16) voneinander beabstandet sind, wenn die jeweilige Platte (11 oder 16) glatt gefaltet wird.

4. Ein Verfahren nach einem der Ansprüche 1 bis 3, wobei die erste Platte (11) aus thermoplastischem polymeren Material zwischen erste und zweite breite, im wesentlichen ebene Platten (12 und 13) gefördert wird, wobei eine Mehrzahl von beabstandeten langgestreckten ersten Wärmedichtelementen (14) sich entlang wenigstens einer der sich jeweils gegenüberstehenden Flächen der ersten und zweiten Platten (12 und 13) erstrecken, wobei die ersten Wärmedichtelemente (14) in wechselweise paralleler Anordnung zueinander beabstandet sind, wobei die Wärmedichtelemente (14) sich quer über die gesamte Breite der umgekanteten ersten platte (11) aus thermoplastischem polymeren Material vom umgefalteten Rand aus erstreckt, wenn die erste Materialplatte (11) zwischen den ersten und zweiten Platten (12 und 13) angeordnet ist;

wobei die zweite Platte (16) aus thermoplastischem polymeren Material zwischen die zweite Platte (13) und eine dritte breite, im wesentlichen ebene Platte (17) gefördert wird, wobei sich eine Mehrzahl von beabstandeten langgestreckten zweiten Wärmedichtelementen (18) entlang wenigstens einer der sich jeweils gegenüberstehenden Flächen der zweiten und dritten Platten (13 und 17) erstreckt, wobei die zweiten Wärmedichtelemente (18) in wechselweise paralleler Anordnung zueinander beabstandet sind, wobei sich die Wärmedichtelemente (18) quer über die gesamte Breite der umgekanteten zweiten Platte (16) aus thermoplastischem polymeren Material von der umgekanteten Kante aus erstrecken, wenn die zweite Materialplatte (16) zwischen den zweiten und dritten Platten (13 und 17) angeordnet ist;

Zusammenpressen der ersten, zweiten und dritten Platten (12, 13 und 17) in eine eng anliegende Flächen-an-Flächenanordnung, so daß (1) die ersten Wärmedichtelemente (14) dicht aufeinandergedrückt sind, wobei die erste Platte (11) aus thermoplastischem Material zwischen den ersten und zweiten Platten (12 und 13) angeordnet ist und

(2) die zweiten Wärmedichtelemente (18) fest aufeinandergedrückt werden, wobei die zweite Platte (16) aus thermoplastischem Material zwischen den zweiten und dritten Platten (13 und 17) angeordnet ist;

während die ersten, zweiten und dritten Platten (12 13 und 17) zusammengedrückt sind, Erwärmen der ersten und zweiten Wärmedichtelemente (14 und 18) auf eine Temperatur, die ausreichend ist, um ein Verschmelzen der umgekanteten Schichten der ersten und zweiten Platten (11 und 16) aus thermoplastischem Material jeweils entlang der Berührungsstellen zwischen den jeweiligen ersten und zweiten Wärmedichtelementen (14 und 18) und den entsprechenden ersten und zweiten Platten (11 und 16) aus thermoplastischem Material zu bewirken, wobei die jeweiligen umgekanteten ersten und zweiten Materialplatten (11 und 16) verschmolzen und entlang langgestreckter Verbindungsnähte verbunden werden, die den wechselweise sich wiederholenden Berührungsstellen zwischen der Wärmedichteinrichtung (14 und 18) und den ersten und zweiten Platten (11 und 16) aus thermoplastischem Material entsprechen, um die einzelnen, langgestreckten Zwischenräume (42) zu bilden;

Lösen des Druckes zwischen den ersten, zweiten und dritten Platten (12, 13 und 17) und Weiterbewegen des Abschnittes der ersten und zweiten Platten (11 und 16) aus thermoplastischem Material von den ersten, zweiten und dritten Platten (12, 13 und 17) nach der Wärmedichtbildung der einzelnen Zwischenräume in den ersten und zweiten Platten (11 und 16) aus thermoplastischem Material, so daß folgende nicht abgedichtete Bereiche der ersten und zweiten Platten (11 und 16) aus thermoplastischem Material gleichzeitig weiterbewegt oder zwischen jeweilige erste, zweite und dritte Platten (12, 13 und 17) gefördert werden;

wobei die dritte Wärmedichtstation ein Paar von langgestreckten dritten Wärmedichtelementen (21) aufweist, die in wechselweise paralleler Anordnung zueinander beabstandet sind, wobei die dritten Wärmedichtelemente (21) dazu vorgesehen sind, in Druckberührung mit den übereinander angeordneten ersten und zweiten Platten (11 und 16) gebracht zu werden, und eine Verschmelzung der umgekanteten Lagen der ersten und zweiten Platten (11 und 16) wie auch eine Verschmelzung der ersten und zweiten Platten (11 und 16) aneinander entlang der Berührungsstellen zwischen den dritten Wärmedichtelementen (21) und den übereinander angeordneten ersten und zweiten Platten (11 und 16) aus thermoplastischem Material zu bewirken, wobei die ersten und zweiten Platten (11 und 16) weiter gefördert werden, so daß die wechselweise jeweils folgenden Paare von Verbindungslinien, die in den ersten und zweiten Materialplatten (11 und 16) ausgebildet worden sind, benachbart zu den dritten Wärmedichtelementen (21) angeordnet werden;

Herstellen des Kontaktes des dritten Wärmedichtelementes (21) mit den übereinander angeordneten ersten und zweiten Platten (11 und 16), um die ersten und zweiten Platten (11 und 16) entlang zweier beabstandeter Schweißnähte zusammenzudichten;

Trennen der dritten Wärmedichtelemente (21).

**Revendications**

1. Procédé de fabrication d'un dispositif tubulaire à double paroi qui est divisé en une pluralité de compartiments (42) s'étendant de façon sensiblement verticale qui sont adaptés pour être remplis d'eau, de sorte que le dispositif tubulaire rempli d'eau est autoporteur et peut être placé autour d'une plante qui pousse pour protéger thermiquement la plante, ledit procédé comprenant l'étape de:

(a) alimentation d'une feuille de matière polymère, thermoplastique, qui a été repliée sur elle-même vers une première station de thermosoudage dans laquelle des premières lignes de soudure allongées, espacées, répétitives sont formées dans le sens transversal de la première feuille repliée (11) de matière de manière à former des premiers compartiments allongés (42) dans la première feuille repliée (11) entre des premières lignes de soudure adjacentes au-dedans, chacun desdits premiers compartiments (42) étant ouvert à une extrémité de celui-ci et fermé à son autre extrémité par le pli dans ladite première feuille repliée de matière, étant caractérisé par les étapes suivantes:

(b) alimentation d'une seconde feuille (16) de matière polymère, thermoplastique, qui a été repliée sur elle-même vers une seconde station de thermosoudage dans laquelle des secondes lignes de soudure allongées, espacées, répétitives sont formées dans le sens transversal de la seconde feuille repliée de matière de manière à former des seconds compartiments allongés (42) dans la seconde feuille repliée (16) entre des secondes lignes de soudure adjacentes au-dedans, chacun desdits seconds compartiments (42) étant ouvert à une extrémité de celui-ci et fermé à son autre extrémité par le pli dans ladite seconde feuille repliée de matière;

(c) avance des parties des première et seconde feuilles (11 et 16) de matière ayant lesdites premières et secondes lignes de soudure, respectivement, audedans depuis les étapes (a) et (b) vers une troisième station de thermosoudage, dans laquelle lesdites parties des première et seconde feuilles (11 et 16) de matière ayant lesdites premières et secondes lignes de soudure formées au-dedans sont superposées l'une sur l'autre de sorte que les lignes de soudure mutuellement respectives formées dans chacune des parties des première et seconde feuilles (11 et 16) de matière pendant les étapes (a) et (b) se trouvent sensiblement adjacentes les unes aux autres et que les extrémités ouvertes des compartiments mutuellement respectifs (42) dans lesdites première et seconde feuilles de matière se trouvent sensiblement adjacentes les unes aux autres;

(d) alors que les première et seconde feuilles (11 et 16) de matière superposées passent à travers ladite première station de thermosoudage, des paires allongées, espacées, répétitives, de troisièmes lignes de soudure sont formées en travers des première et seconde feuilles de matière superposées de manière à sceller et souder ensemble lesdites première et seconde feuilles (11 et 16) de matière le long desdites troisièmes lignes de soudure, avec les deux lignes de soudure respectives de chaque paire de troisièmes lignes de soudure espacées de façon étroitement adjacente l'une à l'autre et les paires respectives de troisièmes lignes de soudure espacées le long de la dimension longitudinale desdites première et seconde feuilles (11 et 16) de sorte qu'une pluralité de compartiments (42) dans chacune desdites première et seconde feuilles (11 et 16) de matière sont inclus entre des paires espacées, adjacentes, de troisièmes lignes de soudure;

(e) découpe des première et seconde feuilles (11 et 16) de matière dans le sens transversal de leur largeur entre les deux lignes de soudure étroitement espacées de chaque paire de troisièmes lignes de soudure formées dans l'étape (b); et

(f) répétition des étapes (a) à (e).

2. Procédé selon la revendication 1, dans lequel les étapes (a) à (e) sont répétées de façon continue.

3. Procédé selon la revendication 1 ou 2, dans lequel chacune des première et seconde feuilles

10

(11 et 16) est repliée sur elle-même de sorte que les bords latéraux respectifs de chaque feuille repliée (11 et 16) de matière sont espacés l'un de l'autre alors que la feuille respective (11 ou 16) est pliée à plat.

4. Procédé selon l'une des revendications 1 à 3, dans lequel

la première feuille (11) de matière polymère thermoplastique est alimentée entre des premier et second plateaux larges, sensiblement plats (12 et 13), avec un ensemble de premiers éléments de thermosoudage (14) espacés, allongés, qui s'étendent le long d'au moins une des surfaces respectives se faisant face desdits premier et second plateaux (12 et 13), lesdits premiers éléments de thermosoudage (14) étant espacés en relation mutuellement parallèle les uns par rapport aux autres, les éléments de thermosoudage (14) s'étendant en travers de toute la largeur de la première feuille repliée (11) de matière polymère thermoplastique depuis le bord replié de celle-ci lorsque ladite première feuille (11) de matière est placée entre lesdits premier et second plateaux (12 et 13);

la seconde feuille (16) de matière polymère thermoplastique est alimentée entre ledit second plateau (13) et un troisième plateau large, sensiblement plat (17), avec un ensemble de seconds éléments de thermosoudage (18) espacés, allongés, qui s'étendent le long d'au moins une des surfaces respectives se faisant face desdits second et troisième plateaux (13 et 17), lesdits seconds éléments de thermosoudage (18) étant espacés en relation mutuellement parallèle les uns par rapport aux autres, les éléments de thermosoudage (18) s'étendant en travers de toute la largeur de la seconde feuille repliée (16) de matière polymère thermoplastique depuis le bord replié de celle-ci lorsque ladite seconde feuille (16) de matière est placée entre lesdits second et troisième plateaux (13 et 17);

les premier, second et troisième plateaux (12, 13 et 17) sont comprimés ensemble en contact étroit, face-à-face, de telle sorte que (1) les premiers éléments de thermosoudage (14) sont comprimés étroitement avec ladite première feuille (11) de matière thermoplastique entre lesdits premier et second plateaux (12 et 13), et

(2) les seconds éléments de thermosoudage (18) sont comprimés étroitement avec ladite seconde feuille (16) de matière thermoplastique entre lesdits second et troisième plateaux (13 et 17);

pendant que lesdits premier, second et troisième plateaux (12, 13 et 17) sont comprimés ensemble, lesdits premiers et seconds éléments de thermosoudage (14 et 18) sont chauffés à une température suffisante pour effectuer la fusion des couches repliées desdites première et seconde feuilles (11 et 16) de matière thermoplastique, respectivement, le long des lieux de contact entre les premiers et seconds éléments de thermosoudage respectifs (14 et 18) et les première et seconde feuilles correspondantes (11 et 16) de matière thermoplastique, de sorte que les première et seconde feuilles repliées respectives (11 et 16) de matière sont fusionnées et liées ensemble le long de lignes de liaison allongées correspondant aux lieux mutuellement respectifs de contact entre lesdits moyens de thermosoudage (14 et 18) et lesdites première et seconde feuilles (11 et 16) de matière thermoplastique de manière à former les compartiments individuels, allongés (42);

la compression entre les premier, second et troisième plateaux (12, 13 et 17) est relâchée et la partie desdites première et seconde feuilles (11 et 16) de matière thermoplastique est avancée depuis les premier, second et troisième plateaux (12, 13 et 17) suivant la formation par thermosoudage desdits compartiments individuels dans lesdites première et seconde feuilles (11 et 16) de matière thermoplastique de sorte que des parties subséquentes non soudées desdites première et seconde feuilles (11 et 16) de matière thermoplastique sont simultanément avancées ou alimentées entre les premier, second et troisième plateaux respectifs (12, 13 et 17);

ladite troisième station de thermosoudage a une paire de troisièmes éléments de thermosoudage allongés (21) qui sont espacés en relation mutuellement parallèle l'un par rapport à l'autre, lesdits troisièmes éléments de thermosoudage (21) étant adaptés pour être amenés en contact comprimé avec les première et seconde feuilles superposées (11 et 16) et effectuer la fusion des couches repliées desdites première et seconde feuilles (11 et 16) ainsi que la fusion des première et seconde feuilles (11 et 16) l'une avec l'autre le long des lieux de contact entre les troisièmes éléments de thermosoudage (21) et lesdites première et seconde feuilles superposées (11 et 16) de matière thermoplastique, lesdites première et seconde feuilles superposées (11 et 16) étant avancées de sorte que les paires arrière, mutuellement respectives, de lignes de liaison formées dans les première et seconde feuilles (11 et 16) de matière sont placées de façon adjacente audit troisième élément de thermosoudage (21);

le troisième élément de thermosoudage (21) est amené en contact avec les première et seconde feuilles superposées (11 et 16) de manière à souder les première et seconde feuilles (11 et 16) ensemble le long de deux lignes de soudure espacées; et

les troisièmes éléments de thermosoudage (21) sont séparés.

Fig. 1

Fig. 2

EP 0 179 053 B1

Fig. 3

Fig. 4